# EUROPEAN PATENT SPECIFICATION

(11) **EP 1 366 414 B1**
(45) Date of publication and mention of the grant of the patent: **06.10.2004**
(21) Application number: 02740050.6
(22) Date of filing: 14.01.2002
(51) Int. Cl.: G06F 9/38

(54) **A METHOD, A SYSTEM AND A COMPUTER PROGRAM PRODUCT FOR MANIPULATING AN INSTRUCTION FLOW IN A PIPELINE OF A PROCESSOR**
VERFAHREN, SYSTEM UND COMPUTERPROGRAMMPRODUKT ZUM MANIPULIEREN EINES ANWEISUNGSFLUSSES IN EINER PIPELINE EINES PROZESSORS
PROCEDE, SYSTEME ET PROGRAMME INFORMATIQUE SERVANT A MANIPULER UN TRAIN D'INSTRUCTIONS DANS LE PIPE-LINE D'UN PROCESSEUR

(30) Priority: 06.02.2001 EP 01200425
(43) Date of publication of application: 03.12.2003
(73) Proprietor: Adelante Technologies B.V., 5652 AH Eindhoven (NL)
(72) Inventor: SKRZESZEWSKI, Tomasz, K., NL-5656 AA Eindhoven (NL); VERMEIRE, Ferdinand, G., C., NL-5656 AA Eindhoven (NL); KIEVITS, Peter, A., E., J., NL-5656 AA Eindhoven (NL)
(74) Representative: Prins, Adrianus Willem, Mr. Ir.
(86) International application number: PCT/IB2002/000091
(87) International publication number: WO 2002/063465

(56) References cited:
- EP-A- 0 463 966
- WO-A-01/69378
- WO-A-99/04334
- US-A- 5 867 701

## Description

The invention relates to a method for manipulating an instruction flow in a pipeline of a processor, comprising the following steps:
- detecting a stimulus leading to a disruption of progress of an instruction through a pipeline;
- on detecting said stimulus, forcing an instruction A required for responding to said stimulus by said processor directly into a first intermediate pipeline stage, said intermediate stage becoming available as a result of said disruption.

The invention also relates to a system for manipulating an instruction flow comprising:
- a processor having a processing pipeline;
- detection means for detecting a stimulus leading to a disruption of progress of an instruction through said pipeline;
- insertion means, responsive to said detection means, for forcing an instruction A directly into a first intermediate pipeline stage, said stage becoming available as a result of said disruption.

The invention also relates to a computer program product according to the preamble of claim 13.

In WO99/18,497 a method for interrupt handling in pipelined processors is disclosed.

One of the main problems in the field of pipelined processing is the cost of a disruption of the instruction flow through a pipeline with respect to cycles lost. Such a disruption can for instance be a pipeline flush or a pipeline stall. Inter alia, stimuli leading to such disruptions can be specific program instructions like unconditional jumps and branches, or can be external interrupt calls. On an interrupt call, the flow of instructions through a pipeline has to be terminated to make way for the instructions required for handling the interrupt. This is usually done by storing the processor state and flushing the pipeline. After the interrupt has been handled, the instruction flow will be restarted from the point it was terminated prior to the handling of the interrupt.
The impact of such disrupting events is becoming more critical with an increasing number of stages in a pipeline due to the fact that more cycles have to be flushed as a result of the occurring disruption. This causes significant processor performance degradation when such disrupting events occur with high frequency. Therefore, it is worthwhile to provide a method that limits the number of cycles lost during such events, which results in a reduction of processor performance degradation.

The aforementioned prior art provides a method for interrupt handling demonstrated in a three-stage ― fetch, decode, execute ― pipeline, in which the loss of cycles on the subsequent occurrence and handling of an interrupt call is avoided, thus reducing pipeline latencies and increasing processor performance. This is realized by using a dedicated interrupt instruction register in which the instructions, associated with a specific interrupt, are stored. By labeling such an interrupt with a number of configuration fields, the number of instructions to be inserted as well as their register location can be retrieved by evaluating these fields on receiving an interrupt call. Consequently, these instructions can be forced directly into the decode stage without having to use the preceding fetch stage for the interrupt handling. A drawback of this method is, however, that it provides a solution for the handling of configured interrupts only, and that extensive additional hardware in the form of a configurable register is required to harbor the insertable interrupt instructions.

Accordingly, it is a first object of the present invention to provide a method of the kind described in the opening paragraph that reduces the number of cycles lost covering a wide variety of stimuli leading to the disruption of an instruction flow.

It is a second object of the present invention to provide a system of the kind described in the opening paragraph in which cycle loss reduction is enabled for a wide variety of stimuli leading to the disruption of an instruction flow.

It is a third object of the invention to provide a computer program product comprising a code module for execution by the aforementioned system.

Now, the first object is realized in that said stimulus is detected from an instruction type of an instruction B residing in a second intermediate stage of the pipeline. The invention is based on the recognition of the fact that an occurrence of an instruction flow disruption like a pipeline flush generally leads to the execution of a number of disruption related, generic instructions, which are generic in the sense that they are disruption cause independent. In addition, it has been recognized that instruction flow disruptions can be caused by instructions belonging to a certain instruction type, like unconditional jumps, or subroutine calls. For instance, regardless of its subroutine address, a subroutine call will always cause a pipeline flush due to the fact that the instructions trailing the subroutine call in the pipeline have become redundant. In other words, the pipeline flush is not caused by the present instantiation of the instruction but by the class it belongs to, i.e. its relation to a certain instruction type. By enabling the recognition of instructions belonging to such instruction types in intermediate pipeline stages, like a decode stage prior to a first execution stage of a pipeline, an in the pipeline present redundant instruction can be replaced by an aforementioned, required generic instruction, thus reducing the number of cycles lost as a result of the pipeline flush by the number of instructions that can be inserted accordingly. In short, on detection of such a stimulus, the pipeline stages preceding the stage carrying the stimulus can be immediately flushed and one of the flushed cycles can be directly reused by insertion of a required generic instruction.

For instance, it is an advantage to insert an instruction A that causes the processor to store a processor status on a stack. There are several instruction flow disrupting events that cause the processor to switch tasks. Routinely, the discontinued task has to be restartable, which means that a save action on the current task status has to be performed before the next task can be executed. Consequently, the execution of such a storage instruction is usually required and reusing a flushed cycle by the forced insertion of this instruction in an intermediate pipeline stage will increase processor performance.

For similar reasons, it is advantageous to insert an instruction A that causes the processor to retrieve a processor status from a stack. When a temporary task is ending and the processor needs to restart a previous task, the accompanying task status needs to be retrieved. Again, a flushed intermediate pipeline stage can be reused for the direct insertion of such an instruction.

It is another advantage that instruction B is an interrupt call that has been inserted into said first intermediate pipeline stage by said insertion means. This approach also allows for a conventional way of dealing with interrupt calls. Instead of treating an interrupt call as an external stimulus, the processor rather than the interrupt handler can 'translate' an interrupt request into an interrupt signalling instruction i.e. interrupt call that is interleaved with the instruction flow of the current process. As a result, the aforementioned task switching process will now be initiated by the internal detection of said signalling instruction rather than by the interrupt handler.
As a result, several tasks of the interrupt handler can be transferred to the pipelined processor. This enables a simplification of the interrupt handler architecture, which results in a reduction of required hardware.

Furthermore, it is an advantage to extend the detection of said stimuli to a programmable instruction causing a pipeline flush. Such types of instructions, like function or subroutine calls, also cause a processor to flush the pipeline in order to switch and resume tasks, which makes these types of instructions eligible candidates for early detection.

A frequently occurring problem with the initiation of programmable instructions is the occurrence of pipeline stalls in cases where the address of a programmable instruction has to be fetched from a storage device like a register. Due to the fact that the concurrent fetch of the programmable instruction address and store of a return address require the use of the same data bus, a stall as a result of an I/O conflict will occur. An implementation of the method prevents this unwanted effect by inserting an instruction A that causes the processor to store a return address on a stack.
Because of the rescheduling of the return address store operation into a flushed cycle, the store operation will be executed after the programmable instruction address fetch has been performed, thus preventing the pipeline from stalling and, as a consequence, improving pipeline throughput and processor performance.

Now, the second object is realized in that said stimulus is detectable from an instruction type of an instruction B residing in a second intermediate stage of the pipeline. By recognizing members, or instances, of a class of instructions causing a disruption of an instruction flow, for instance by recognition of a unitary signature like a predefined bit pattern, a necessary pipeline flush can be performed in combination with a subsequent insertion of an instruction A in an intermediate pipeline stage, thus improving the performance of the system.
For such a system, it is advantageous that:
- said instruction B is an element of an instruction bundle comprising a plurality of instructions;
- said pipeline comprises a plurality of execute stages for executing the plurality of instructions of said instruction bundle in a parallel fashion, and
- said detections means precedes the plurality of execute stages.
Processors that process instruction bundles rather than separate instructions usually comprise a large number of execute stages, which are arranged to execute the instructions in a parallel fashion. Such instructions are commonly referred to as operations in the Very Long Instruction Word (VLIW) nomenclature. A consequence of such architectures is that the detection of a stimulus leading to a disruption of progress of an instruction through a pipeline is hardware demanding, due to the fact that several, if not each, of the execute stages may encounter that stimulus. However, by arranging the detection means to precede the plurality of execute stages, the detection can take place in one central location, thus dramatically reducing the amount of required hardware in terms of both detection and control logic.

In this context, it is another advantage that said detection means is arranged to evaluate a bit pattern attached to said instruction bundle, said bit pattern marking the presence of said instruction type amongst said plurality of instructions.
Instruction bundles are generated prior to execution of the plurality of instructions. This can be done either statically, i.e. by a compiler, or dynamically, i.e. by a resource scheduler on board an integrated circuit. These generators can extend the instruction bundle with a bit pattern, indicating whether or not instructions of a certain type are present in the instruction bundle. This way, only the extended bit pattern rather than the whole instruction bundle has to be evaluated to detect an instruction type of an instruction B residing in a second intermediate stage of the pipeline, thus facilitating swift and simple detection of such a stimulus. It is a further advantage that said instruction bundle is a Very Long Instruction Word (VLIW) in a compressed form. Due to the introduction of the aforementioned bit pattern extension, the VLIW need not be evaluated itself by the detection means. Therefore, it can be distributed in a compressed form through a large part of the architecture, which results in a reduction of necessary hardware like data wires.

Because of the aforementioned generic nature of the insertable instruction, it is advantageous that the instruction A to be forced into a pipeline by said insertion means is present in the system in a hard-coded manner, i.e. the instruction is embedded inside the processor core. This allows for facile and rapid insertion of instructions, and is also cheap in terms of area increase as long as only a few different instructions instructions need to be inserted this way. If a large number of different instructions have to be inserted by the insertion means, it becomes advantageous that the instruction A to be forced into a pipeline by said insertion means is stored in a data storage device. The grouping of insertable instructions in a data storage device prevents the need for complex architectures in order to select the correct hard-coded instruction. If said data storage device is configurable, like a random access memory, the use of different sets of insertable instructions becomes enabled. Such sets can for instance be program specific, making these performance enhancing means of the system even more generic.

The third object of the invention is realized by that said code module comprises an instruction extended with a bit pattern, said bit pattern making said instruction recognizable to the detection means of one of said systems.

The invention is described in more detail and by way of example with reference to the accompanying drawing wherein:
Figure 1 represents an architecture of a pipeline of a processor according to the invention,
Figure 2 is a diagram of an insertion device according to the invention,
Figure 3 is a schematic diagram of a pipeline comprising a plurality of execute stages,
Figure 4a represents a JumpAndLinkRegister instruction for a RISC processor,
Figure 4b is a representation of a VLIW with additional bit pattern according to the invention,
Figure 5 is a schematic table of an exemplary evolution of an instruction flow in a pipeline prior to, during and after the detection of an instruction flow disrupting event according to the invention.

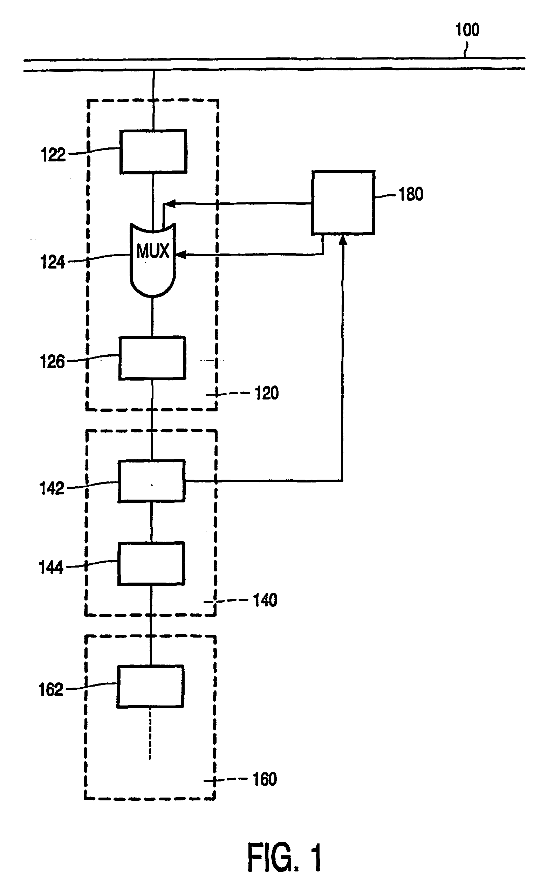

In Figure 1, the processing pipeline has been divided into three main sections: a fetch stage 120, a decode stage 140 and a execute stage 160, each marked by a dashed line. Furthermore, a data bus 100 has been included to indicate the I/O functionality of fetch stage 120. All stages 120, 140 and 160 have been divided into subsections, indicating that each stage is merely represented by its functionality rather than its actual multiplicity. For instance, the fetch stage 120 comprises two stages 122 and 126, which can either be microstages, i.e. stages that perform a subtask of the fetch process in such a way that a complete fetch operation is finished in a single clock cycle, or 'independent' substages, in which case the fetch operation is completed in a number of clock cycles equalling the number of stages involved. However, complex stages containing both microstages and independent substages can also exist, or a different number of stages can be present It is emphasized that Figure 1 only presents an examplary lay-out of a pipeline of a processor, and that other arrangements are possible without departing from the scope of the invention. In addition, the processing pipeline has a detection means 142 for detecting a stimulus leading to a disruption of the progress of an instruction through said pipeline, and an insertion means 180, responsive to said detection means, for forcing an instruction A directly into a first intermediate pipeline stage 126, said stage becoming available as a result of said disruption. In detection means 142, said stimulus is detectable from an instruction type of an instruction B residing in this second intermediate stage of the pipeline. In an embodiment of the invention, detection means 142 comprises a comparator and a look-up table (LUT). The comparator compares a predefined fragment of the total bit pattern, associated with an instruction, with a number of bit patterns that are stored in the LUT. Following a succesful match between the fragment and one of the bit patterns in the LUT, detection means 142 notifies insertion means 180 that an instruction of a certain type has been detected by sending a designated signal to said means 180. Insertion means 180 will respond to the control signal by triggering the flushing of the pipeline stages prior to the stage harboring detection means 142. In Figure 1, the control mechanism between insertion means 180 and the involved pipeline stages to be flushed is omitted for reasons of clarity. Subsequently, insertion means 180 will select and output an appropriate instruction A for insertion and send a control signal to multiplexer (MUX) 124, which will insert instruction A into stage 126 of the pipeline, thus effectively reusing a flushed cycle. It should however be obvious to a person skilled in the art that the aforementioned realization of detection means 142 is merely an example of a realization of such means and that many variations can be readily produced without departing from the here described teachings.

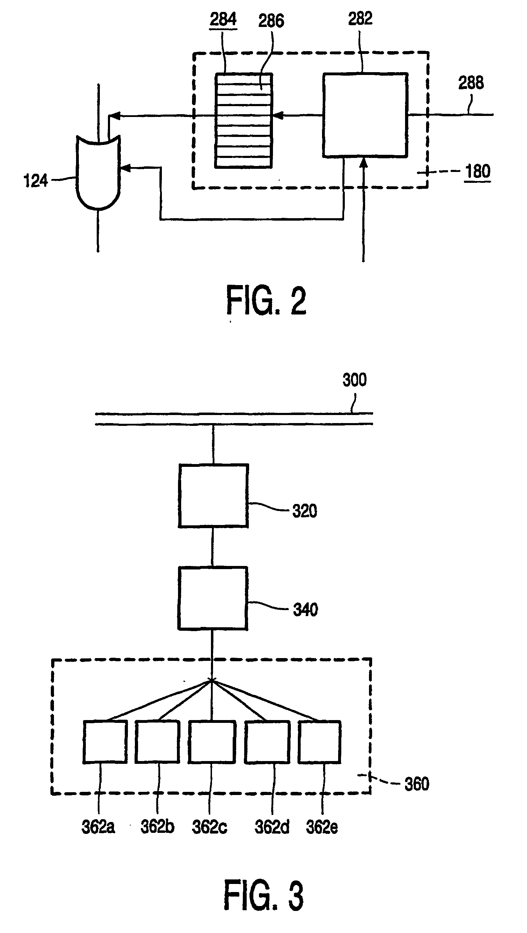

In an embodiment of the invention, as depicted in Figure 2, insertion means 180 comprises control means 282, which is responsive to a signal coming from detection means 124 not shown in Figure 2, as indicated by the arrow pointing towards 282. Such a signal will trigger control means 282 to select and subsequently output the instruction A to be forced into a pipeline to multiplexer 124. Instruction A can be present in the system in a hard-coded manner, i.e. the instruction is embedded in the silicon of the processor core. This can take the form of a small unconfigurable data storage device 284, in which instruction A can be stored in one of the fields 286. Hard-coded storage is a cheap way of implementing such insertable instructions. Its lack of flexibility usually is an negligable restriction, due to the fact that instruction A usually is of a generic nature, i.e. many different Instruction Flow Disrupting Events (IFDE's) require the insertion of that particular instruction. However, it has been envisaged that it can be benificiary to be able to alter the set of insertable instructions, in which case the unconfigurable data storage device 284 can be replaced by a configurable data storage device like a configurable memory. The use of a configurable memory like a random access memory allows for program-specific IFDE handling, which may lead to enhanced flexibility and a further increase of processor performance.

Optionally, control means 282 can also be responsive to an interrupt line 288 originating from an interrupt handler not shown. This way, upon receipt of an interrupt request from external hardware, interrupt handler can induce the insertion of an interrupt call as an instruction into the pipeline, which can be realized by simply overwriting an instruction that is already present in the pipeline. As a result, detection means 142 can recognize such a maskable interrupt instruction i.e. interrupt call after it has been inserted by insertion means 180 into the pipeline, and can force insertion means 180 to insert an instruction which will cause the processor to store the return address of the instruction preceding the interrupt instruction on a stack, ensuring the retrieval of the overwritten instruction after the interrupt has been handled. Main advantage of such an implementation is that an interrupt handler, which handles external interrupt requests, can become very simple or, in extreme cases, can be totally omitted from the system, thus reducing system complexity and required hardware.

An additional advantage of the above described arrangements is a significant reduction of hardware required in a system, especially in architectures where the execute stage comprises a plurality of substages, like for instance in VLIW processors. An schematic example of such an architecture is given in Figure 3. Here, fetch stage 320 and decode stage 340 precede a complex execute stage 360, comprising a plurality of stages 362a to 362e. In such architectures, each of the execute stages 362a to 362e may require means for detecting an IFDE , which, as a result, can lead to a considerable amounts of required control hardware. By introducing of a detection means 142 in an earlier stage of the pipeline, like in decode stage 340 or one of its substages, significant amounts of hardware can be saved due to the fact that IFDE detection is moved from a number of decentralized stages to a central stage in the pipeline preceding the plurality of decentralized stages 362a to 362e. It is emphasized that Figure 3 merely serves as an example and that other architectures with different degrees of hierarchy and complexity are considered to be equally suitable candidates for such a centralized IFDE detection approach.

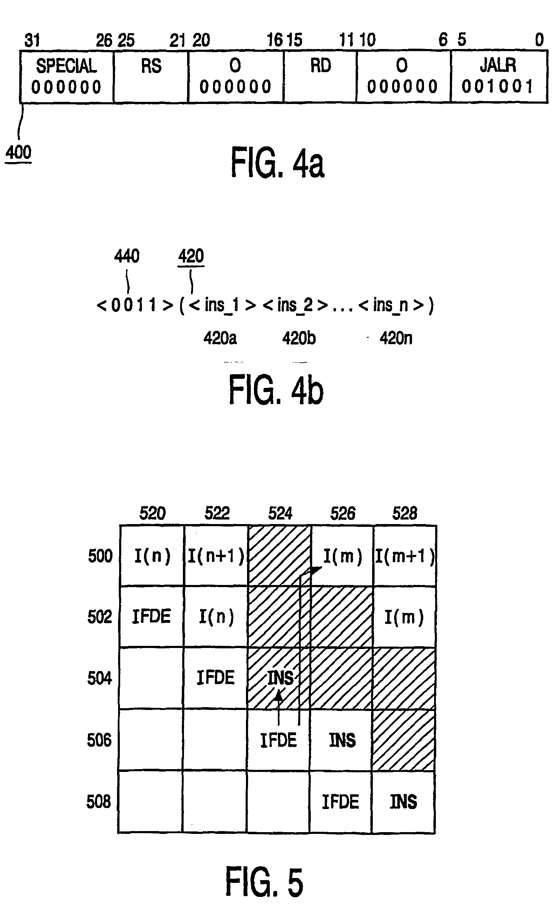

An IFDE is detected by detection means 142 through evaluation of a part of an opcode received by these means by detecting the type of an instruction from its designated part of the opcode. For example, in Figure 4a, the 32-bit Jump And Link Register (JALR) instruction for a RISC processor comprises several fields, including the 6-bit pattern ranging from bit 0-5. This bit pattern indicates that the instruction is an instantiation of a JALR instruction type. All different instances of JALR instructions in program memory will have this 6-bit identifier in common, making them recognizable as a class, or type of instructions. However, such detection is not straightforward when dealing with multiple instruction opcodes, like the instruction bundle 420 comprising instructions 420a to 420n in Figure 4b. One-by-one evaluation of instructions 420a to 420n will become increasingly complicated for an increasing number of instructions in an instruction bundle 420, especially when the instruction bundle 420 is a VLIW in a compressed form, in which case decompression has to take place before evaluation. These complications can be avoided by attaching a bit pattern 440 to instruction bundle 420, in which bit pattern 440 marks the presence of a detectable instruction type amongst the plurality of instructions 420a-420n. Such bit patterns can for instance be added to the instruction bundles in a compilation process, in which a computer program product, comprising a code module for execution by a system according to the invention, is formed.

A system in motion is depicted in Figure 5, in particular the progress of instructions through arbitrary pipeline stages 500-508 during operation cycles 520-528. It depicts the progress of an initial instruction flow comprising instructions labelled I(n) and I(n+1), and an instruction I(n-1), here labelled IFDE, since it is going to cause a pipeline flush. Therefore, instruction IFDE is, a stimulus leading to a disruption, of progress of an instruction through a pipeline, in this case the progress of I(n) and I(n+1), which is disrupted in cycle 524 by a pipeline flush. This pipeline flush is caused by the detection of IFDE in stage 506 during clock cycle 524, which results in the subsequent flushing of preceding stages 500-504, thus effectively removing instructions I(n) and I(n+1) from stages 502 and 504 in the pipeline. The pipeline stages becoming available by the pipeline flush have been shaded in Figure 5.

In addition, on detecting said stimulus, an instruction A required for responding to said stimulus by said processor is forced directly into a first intermediate pipeline stage, said intermediate stage becoming available as a result of said disruption. Here, inserted instruction A, labelled INS in Figure 5, is inserted in the stage from which instruction I(n) has been removed during the preceding pipeline flush. For reasons of clarity, the instructions I(n) to I(n+2) have already been omitted from cycle 524, thus effectively showing the pipeline status after the flush in cycle 524. In addition, the instruction address counter in stage 500 will be updated, ensuring that stage 500 will fetch the appropriate instruction I(m) in a next cycle 526, changing the instruction flow to instructions I(m) and subsequent instructions.

It is also useful to reuse flushed pipeline stages by inserting instructions that control the pipeline flow, like the insertion of an instruction A (INS) that causes the processor either to store a processor status on a stack or to retrieve a processor status from a stack. As explained earlier, the complexity of interrupt handling or, in general, handling of IFDE's, scales with the complexity of pipeline architectures. Integration of such stack I/O operations as instructions in the instruction set has the advantage that insertion of such an instruction delays its execution by at least a cycle, thus avoiding complex timing issues that can occur when saving or restoring a state of a processor comprising a plurality of concurrent execute stages in operation, like stages 362a-362e. In combination with the fact that all other instructions following the IFDE have been flushed from the pipeline before they can reach an execute stage, the current processor status is now accurate by definition, allowing a significant reduction of the aforementioned control hardware.

For similar reasons, an embodiment of the invention comprises an instruction B (IFDE) being a programmable instruction causing a pipeline flush, and an instruction A (INS) causing the processor to store a return address on a stack. Such a programmable instruction can be the aforementioned JALR instruction, in which case the instruction flow has to be interrupted and the content of the register field has to be retrieved. At the same time, a return address may have to be stored as well if the instruction flow has to be resumed from its disrupted point at a later stage of the program execution. Not only does the insertion mechanism reduce the required amount of control hardware, but it also avoids pipeline stalls in these situations. Without insertion of the return address instruction, both the retrieval of the required instruction address from its register location as well as the storage of the return address would result in a conflicting access of a data bus within a same cycle, which usually has to be solved by including arbitration hardware in the processor architecture. By separating these two resource dependent tasks, the pipeline flow is smoothened and the amount of control hardware can be reduced.

The many features and advantages of the invention are apparent from the detailed specification and it is intended by the appended claims to cover al such features and advantages that fall within the scope of the invention. Since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A method for manipulating an instruction flow in a pipeline of a processor, comprising the following steps:
- detecting a stimulus leading to a disruption of progress of an instruction through a pipeline;
- on detecting said stimulus, forcing an instruction A required for responding to said stimulus by said processor directly into a first intermediate pipeline stage, said intermediate stage becoming available as a result of said disruption,
**characterized in that** said stimulus is detected from an instruction type of an instruction B residing in a second intermediate stage of the pipeline.

2. A method according to claim 1, **characterized in that** said instruction A causes the processor to store a processor status on a stack.

3. A method according to claim 1, **characterized in that** said instruction A causes the processor to retrieve a processor status from a stack.

4. A method according to claim 1, **characterized in that** said instruction B is an interrupt call that has been inserted into said first intermediate pipeline stage by said forcing step.

5. A method according to claim 1, **characterized in that** said instruction B is a programmable instruction causing a pipeline flush.

6. A method according to claim 5, **characterized in that** instruction A causes the processor to store a return address on a stack.

7. A system for manipulating an instruction flow, comprising:
- a processor having a processing pipeline;
- detection means (142) for detecting a stimulus leading to a disruption of the progress of an instruction through said pipeline;
- insertion means (180), responsive to said detection means, for forcing an instruction A directly into a first intermediate pipeline stage (126), said stage becoming available as a result of said disruption,
**characterized in that** said stimulus is detectable from an instruction type of an instruction B residing in a second intermediate stage of the pipeline (142).

8. A system according to claim 7, **characterized in that**:
- said instruction B is an element of an instruction bundle (420) comprising a plurality of instructions;
- said pipeline comprises a plurality of execute stages (362) for executing the plurality of instructions of said instruction bundle (420) in a parallel fashion, and
- said detections means (142) precedes the plurality of execute stages.

9. A system according to claim 8, **characterized in that** said detection means (142) is arranged to evaluate a bit pattern (440) attached to said instruction bundle (420), said bit pattern (440) marking the presence of said instruction type amongst said plurality of instructions.

10. A system according to claim 8 or 9, **characterized in that** said instruction bundle (420) is a Very Long Instruction Word (VLIW) in a compressed form.

11. A system according to one of the claims 7-10, **characterized in that** the instruction A to be forced into a pipeline by said insertion means is present in the system in a hard-coded manner.

12. A system according to one of the claims 7-10, **characterized in that** the instruction A to be forced into a pipeline by said insertion means is stored in a data storage device (284).

13. A computer program product, comprising a code module for execution by the system of claim 9, **characterized in that** said code module comprises an instruction extended with a bit pattern, said bit pattern making said instruction recognizable to the detection means of one of said systems.

## Patentansprüche

1. Verfahren zur Handhabung eines Befehlsstroms in einer Pipeline eines Prozessors, mit folgenden Schritten:
- Detektieren eines Impulses, der eine Unterbrechung der Weiterleitung eines Befehls durch eine Pipeline bewirkt;
- bei Detektieren des Impulses Zwingen eines Befehls A, der zum Ansprechen auf den Impuls durch den Prozessor erforderlich ist, direkt in eine erste Pipeline-Zwischenstufe, die infolge der Unterbrechung verfügbar wird;
**dadurch gekennzeichnet, dass**
der Impuls aus einem Befehlstyp eines Befehls B in einer zweiten Zwischenstufe der Pipeline detektiert wird.

2. Verfahren nach Anspruch 1, **dadurch gekennzeichnet, dass** der Befehl A bewirkt, dass der Prozessor einen Prozessorstatus in einem Stapelspeicher speichert.

3. Verfahren nach Anspruch 1, **dadurch gekennzeichnet, dass** der Befehl A bewirkt, dass der Prozessor einen Prozessorstatus aus einem Stapelspeicher ausliest.

4. Verfahren nach Anspruch 1, **dadurch gekennzeichnet, dass** der Befehl B ein Interrupt-Aufruf ist, der in dem Zwing-Schritt in die erste Pipeline-Zwischenstufe eingefügt worden ist.

5. Verfahren nach Anspruch 1, **dadurch gekennzeichnet, dass** der Befehl B ein programmierbarer Befehl ist, der ein Leeren der Pipeline bewirkt.

6. Verfahren nach Anspruch 5, **dadurch gekennzeichnet, dass** der Befehl A bewirkt, dass der Prozessor eine Rückkehradresse in einem Stapelspeicher speichert.

7. System zur Handhabung eines Befehlsstroms, mit:
- einem Prozessor mit einer Verarbeitungs-Pipeline;
- einer Detektiereinrichtung (142) zum Detektieren eines Impulses, der eine Unterbrechung der Weiterleitung eines Befehls durch die Pipeline bewirkt;
- einer Einfügeeinrichtung (180) zum Zwingen eines Befehls A direkt in eine erste Pipeline-Zwischenstufe (126) in Reaktion auf die Detektiereinrichtung, wobei die Stufe infolge der Unterbrechung verfügbar wird;
**dadurch gekennzeichnet, dass**
der Impuls aus einem Befehlstyp eines Befehls B in einer zweiten Zwischenstufe der Pipeline (142) detektierbar ist.

8. System nach Anspruch 7, **dadurch gekennzeichnet, dass**:
- der Befehl B ein Element eines Befehlsbündels (420) ist, das mehrere Befehle aufweist;
- die Pipeline mehrere Ausführungsstufen (362) zum parallelen Ausführen der mehreren Befehle des Befehlsbündels (420) aufweist; und
- die Detektiereinrichtung (142) den mehreren Ausführungsstufen vorgeschaltet ist.

9. System nach Anspruch 8, **dadurch gekennzeichnet, dass** die Detektiereinrichtung (142) zum Auswerten eines mit dem Befehlsbündel (420) verbundenen Bitmusters (440) vorgesehen ist, das das Vorhandensein des Befehlstyps unter den mehreren Befehlen markiert.

10. System nach Anspruch 8 oder 9, **dadurch gekennzeichnet, dass** das Befehlsbündel (420) ein sehr langes Befehlswort (VLIW) in komprimierter Form ist.

11. System nach einem der Ansprüche 7-10, **dadurch gekennzeichnet, dass** der von der Einfügeeinrichtung in eine Pipeline zu zwingende. Befehl A festprogrammiert in dem System vorhanden ist.

12. System nach einem der Ansprüche 7-10, **dadurch gekennzeichnet, dass** der von der Einfügeeinrichtung in eine Pipeline zu zwingende Befehl A in einer Datenspeichervorrichtung (284) gespeichert ist.

13. Computerprogrammprodukt mit einem Code-Module zur Ausführung durch das System nach Anspruch 9, **dadurch gekennzeichnet, dass** das Code-Modul einen durch ein Bitmuster verlängerten Befehl aufweist, wobei das Bitmuster den Befehl für die Detektiereinrichtung eines der Systeme erkennbar macht.

## Revendications

1. Procédé pour manipuler un flux d'instructions dans le pipe-line d'un processeur, comprenant les étapes suivantes de :
détection d'un stimulus conduisant à une interruption de l'avancement d'une instruction à travers un pipe-line ;
lors de la détection dudit stimulus, forçage d'une instruction A exigée pour répondre audit stimulus par ledit processeur directement dans un premier étage de pipe-line intermédiaire, ledit étage intermédiaire devenant disponible comme un résultat de ladite interruption ;
**caractérisé en ce que** ledit stimulus est détecté à partir d'un type d'instruction d'une instruction B résidant dans un second étage intermédiaire du pipe-line.

2. Procédé selon la revendication 1, **caractérisé en ce que** ladite instruction A oblige le processeur à stocker un état de processeur sur une pile.

3. Procédé selon la revendication 1, **caractérisé en ce que** ladite instruction A oblige le processeur à récupérer un état de processeur d'une pile.

4. Procédé selon la revendication 1, **caractérisé en ce que** ladite instruction B est un appel d'interruption qui a été inséré dans ledit premier étage de pipe-line intermédiaire par ladite étape de forçage.

5. Procédé selon la revendication 1, **caractérisé en ce que** ladite instruction B est une instruction programmable obligeant un vidage de pipe-line.

6. Procédé selon la revendication 5, **caractérisé en ce que** ladite instruction A oblige le processeur à stocker une adresse de retour sur une pile.

7. Système pour manipuler un flux d'instructions, comprenant :
un processeur ayant un pipe-line de traitement ;
un moyen de détection (142) pour détecter un stimulus conduisant à une interruption de l'avancement d'une instruction à travers ledit pipe-line ;
un moyen d'insertion (180), sensible audit moyen de détection, pour forcer une instruction A directement dans un premier étage de pipe-line intermédiaire (126), ledit étage devenant disponible comme un résultat de ladite interruption ;
**caractérisé en ce que** ledit stimulus est détectable à partir d'un type d'instruction d'une instruction B résidant dans un second étage intermédiaire du pipe-line (142).

8. Système selon la revendication 7, **caractérisé en ce que** :
ladite instruction B est un élément d'un faisceau d'instructions (420) comprenant une pluralité d'instructions ;
ledit pipe-line comprend une pluralité d'étages d'exécution (362) pour exécuter la pluralité d'instructions dudit faisceau d'instructions (420) d'une façon parallèle, et
ledit moyen de détection (142) précède la pluralité d'étages d'exécution.

9. Système selon la revendication 8, **caractérisé en ce que** ledit moyen de détection (142) est disposé pour évaluer un modèle binaire (440) fixé audit faisceau d'instructions (420), ledit modèle binaire (440) marquant la présence dudit type d'instruction parmi ladite pluralité d'instructions.

10. Système selon la revendication 8 ou 9, **caractérisé en ce que** ledit faisceau d'instructions (420) est un mot d'instruction très long (VLIW) sous une forme compressée.

11. Système selon l'une quelconque des revendications 7 à 10, **caractérisé en ce que** ladite instruction A à forcer dans un pipe-line par ledit moyen d'insertion est présente dans le système d'une manière codée en dur.

12. Système selon l'une quelconque des revendications 7 à 10, **caractérisé en ce que** ladite instruction A à forcer dans un pipe-line par ledit moyen d'insertion est stockée dans un dispositif de stockage de données (284).

13. Produit de programme informatique, comprenant un module de code pour l'exécution par le système de la revendication 9, **caractérisé en ce que** ledit module de code comprend une instruction étendue avec un modèle binaire, ledit modèle binaire rendant ladite instruction reconnaissable par le moyen de détection de l'un desdites systèmes.
